(19) Europäisches Patentamt
European Patent Office
Office européen des brevets

(11) **EP 2 632 267 B1**

(12) **EUROPÄISCHE PATENTSCHRIFT**

(45) Veröffentlichungstag und Bekanntmachung des Hinweises auf die Patenterteilung:
**17.08.2016 Patentblatt 2016/33**

(21) Anmeldenummer: **11764728.9**

(22) Anmeldetag: **30.09.2011**

(51) Int Cl.:
***A01N 43/56*** *(2006.01)* ***A01N 47/12*** *(2006.01)*
***A01N 43/80*** *(2006.01)* ***A01N 33/04*** *(2006.01)*
***A01N 33/12*** *(2006.01)* ***A01N 59/14*** *(2006.01)*
***A01N 31/08*** *(2006.01)* ***A01P 3/00*** *(2006.01)*
***A01N 55/08*** *(2006.01)* ***B27K 3/34*** *(2006.01)*
***B27K 3/40*** *(2006.01)*

(86) Internationale Anmeldenummer:
**PCT/EP2011/067165**

(87) Internationale Veröffentlichungsnummer:
**WO 2012/055674 (03.05.2012 Gazette 2012/18)**

(54) **FUNGIZIDE PENFLUFEN MISCHUNGEN**

FUNGICIDAL PENFLUFEN MIXTURES

MÉLANGES FONGICIDES CONTENANT DU PENFLUFÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2010 EP 10190017**
**25.10.2010 EP 10188713**

(43) Veröffentlichungstag der Anmeldung:
**04.09.2013 Patentblatt 2013/36**

(73) Patentinhaber: **LANXESS Deutschland GmbH**
**50569 Köln (DE)**

(72) Erfinder:
- **KOOP, Bernd**
  **50668 Köln (DE)**
- **KUGLER, Martin**
  **42799 Leichlingen (DE)**
- **JAETSCH, Thomas**
  **50668 Köln (DE)**
- **KAULEN, Johannes**
  **51519 Odenthal (DE)**
- **GERHARZ, Tanja**
  **40599 Düsseldorf (DE)**

(56) Entgegenhaltungen:
**WO-A1-03/010149** **WO-A2-2006/114212**
**WO-A2-2006/131221** **DE-A1- 19 548 873**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 632 267 B1

## Beschreibung

Die Erfindung betrifft Penflufen enthaltende Mischungen, die Verwendung dieser Mischungen zum Schutz technischer Materialien und ein Verfahren zur Behandlung technischer Materialien mit den Penflufen Mischungen.

Penflufen (N-(2-[1,3-Dimethylbutylphenyl]-5-fluor-1,3-dimethyl-1H-pyrazol-4-carboxyamid) ist ein Pyrazolylcarboxanilide der Formel (I). Zudem ist Penflufen ein Fungizid.

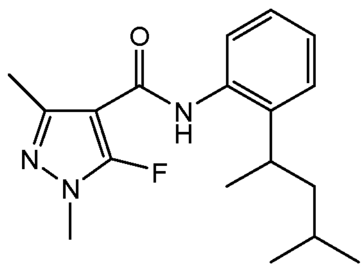

(I)

Pyrazolylcarboxanilide stellen spezielle Carboxamide dar und sind aus der WO 03/010149 zur Bekämpfung von unerwünschten Mirkroorganismen in Pflanzenschutz und Materialschutz bekannt.

In der WO 03/010149 wird Penflufen in einer Liste von weiteren Pyrazolylcarboxaniliden genannt und die Wirkung von Penflufen als Pflanzenschutzmittel in einem Beispiel dargestellt. Spezielle Mischungen mit Penflufen werden nicht beschrieben.

Aus der WO 2006/114212 sind Wirkstoffkombinationen aus Carboxamiden mit bekannten insektiziden Wirkstoffen zur Bekämpfung von unerwünschten tierischen Schädlingen, sowie unerwünschten phytophathogenen Pilzen bekannt. Mischungen aus Penflufen und Insektiziden werden ebenfalls beschrieben.

Weitere Wirkstoffkombinationen mit Penflufen und Insektiziden sind aus der WO 2009/098225 A2 bekannt.

Synergistische, fungizide Wirkstoffkombinationen, die Carboxamide enthalten, mit unterschiedlichsten Mischungspartnern sind aus der WO 2005/041653 bekannt. Auch hier wird Penflufen unter anderen als Mischungspartner benannt. Die Verwendung der synergistischen, fungiziden Wirkstoffkombinationen wird zur Bekämpfung phytopathogener Pilze beschrieben.

Weiterhin ist die Verwendung von Carboxamiden für den Pflanzenschutz und für den Materialschutz aus der WO2009/098218 und der WO2009/090181 bekannt.

Aus der WO 2005/058839 sind eine Vielzahl unterschiedlichster Fungizide, Bakterizide und Insektizide bekannt, die gegebenenfalls mit einem optisch aktiven Carboxamid, wie z.B. einem

Enantiomeren des Penflufens zur Bekämpfung von unerwünschten Mikroorganismen im Pflanzenschutz und im technischen Materialschutz eingesetzt werden können. Spezielle Mischungsbeispiele werden nicht genannt. In einem Beispiel wird die Verwendung eines optisch aktiven Enantiomeren des Penflufens für den Pflanzenschutz dargestellt.

Weitere Wirkstoffkombinationen, die u.a. auch Penflufen enthalten können, sind aus der WO 2007/110173 und der WO 2008/014955 bekannt.

Nachteilig an den bekannten Wirkstoffkombinationen ist, dass ihre Wirksamkeit gegen Mikroorganismen im Materialschutz nicht immer ausreichend ist.

Es bestand daher ein Bedürfnis nach weiteren Wirkstoffkombinationen, die technischen Materialien, insbesondere Holz, Holzwerkstoffen oder Holz-Plastik-Verbundstoffen, besonderen Schutz gegen Mikroorganismen bieten.

Überraschend wurden neue synergistische Wirkstoffkombinationen gefunden, die Penflufen enthalten und die Nachteile des Standes der Technik überwinden.

Gegenstand der Erfindung sind daher Zusammensetzungen, enthaltend

a) Penflufen und dessen Salze oder Säureadditionsverbindungen und

b) mindestens eine Verbindung ausgewählt aus der Gruppe o-Phenylphenol und dessen Alkali- und Erdalkalimetallsalze, Borverbindungen, Verbindungen der Formel (II)

$$((R^1R^2R^3R^4)N)_nX \qquad (II)$$

wobei

$R^1$ oder $R^2$ gleich oder verschieden sein können und unabhängig voneinander für $C_1$-$C_6$-Alkyl stehen und

$R^3$ oder $R^4$ gleich oder verschieden sein können und unabhängig voneinander ausgewählt sind aus der Gruppe $C_6$-$C_{22}$-Alkyl, $C_6$-$C_{22}$-Alkenyl, $C_6$-$C_{24}$-Aryl, $C_5$-$C_{20}$-Cycloalkyl oder Reste der Formel (IV)

$$-[CH_2-CH_2-O]_z-CH_2-CH_2-OH \qquad (IV)$$

wobei z = 1, 2, 3, 4, 5, 6, 7, 8, 9 oder 10 ist und

X ein n-fach geladenes Anion ist und

n eine beliebige ganze Zahl größer als Null darstellt, Isothiazolinone, 3-Iod-2-propinyl-N-butylcarbamate, 3-Iod-2-propinyl-cycloalkylcarbamate, 3-Iod-2-propinyl-arylcarbamat und Verbindungen der Formel (III)

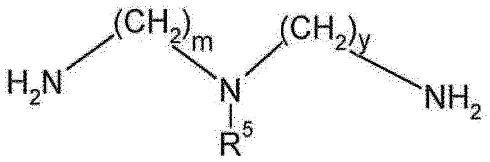

(III)

in der
$R^5$ $C_8$-$C_{18}$-Alkyl, $C_8$-$C_{18}$-Alkenyl oder $C_5$-$C_{20}$-Cycloalkyl und
m und y gleich und verschieden sein können und eine Zahl 1, 2, 3, 4, 5 oder 6 darstellen sowie deren Säureadditionsverbindungen.

Penflufen kann sowohl als Racemat, in enantiomerenreiner Form oder als angereichertes Enantiomerengemisch eingesetzt werden. Auch eine Verwendung als Salz oder Säureadditionsverbindung ist möglich, wobei unter Salzen insbesondere Natrium-, Kalium-, Magnesium-, Calcium-, Zink-, Aluminium-, Eisen- und Kupfer-Salze verstanden wird und unter Säureadditionsverbindungen insbesondere Addukte mit Halogenwasserstoffsäuren, z.B. Chlorwasserstoff und Bromwasserstoff, Carbonsäuren, wie z.B. Ameisensäure, Essigsäure, Weinsäure und Oxalsäure, Sulfonsäuren, wie z.B. p-Toluolsulfonsäure sowie Schwefelsäure, Phosphorsäure und Salpetersäure verstanden wird.

Bevorzugt handelt es sich bei den Borverbindungen um anorganischen Borverbindungen. Besonders bevorzugt handelt es sich bei den Borverbindungen um Alkali- oder Erdalkalimetallborate, wie z.B. Natriumtetraborat, Dinatriumtetraborat Decahydrat (Natriumborat, Dinatriumoctaborat Tetrahydrat, oder um Borsäure, Boroxid, Borsäureanhydrid, oder Borsäureester oder Mischungen dieser Verbindungen. Ganz besonders bevorzugt werden Mischungen mit Boroxid, Borax und Borsäure eingesetzt.

Die Verbindungen der Formel (II) stellen organische, quartäre Ammoniumverbindungen dar. Bevorzugt sind die Verbindungen der Formel (II) Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammmoniumchlorid, Dioctyldimethylammoniumchlorid, Hexadecyltrimethylammoniumchlorid, Didecylmethylpoly(oxyethyl)ammoniumpropionat, Didecyldimethylammoniumcarbonat, Didecyldimethylammoniumhydrogencarbonat. Besonders bevorzugt sind Mischungen mit Didecylmethylpoly(oxyethyl)ammoniumpropionat, Benzalkoniumchlorid, Didecyldimethylammmoniumchlorid, Didecyldimethylammoniumcarbonat und Didecyl-dimethylammoniumhydrogencarbonat.

Die Reste mit der Formel (IV) stellen Derivate von Polyethylenglykolen dar.
z ist bevorzugt 2, 3, 4 oder 5.
$R^1$ oder $R^2$ stehen unabhängig voneinander bevorzugt für Methyl, Ethyl, n-Propyl, iso-Propyl, n-Butyl, sec.-Butyl, tert.-Butyl oder n-Pentyl. Besonders bevorzugt stehen $R^1$ oder $R^2$ für Methyl.

$R^3$ oder $R^4$ stehen unabhängig voneinander bevorzugt für Phenyl, Benzyl, o-, m-, p- Xylol, o-, m-, p-Trimethylphenyl, o-, p-, m-Chlorbenzyl, $-CH_2-CH_2-O-CH_2-CH_2-OH$, $-[CH_2-CH_2-O]_2-CH_2-CH_2-OH$, $-[CH_2-CH_2-O]_3-CH_2-CH_2-OH$, $-[CH_2-CH_2-O]_4-CH_2-CH_2-OH$, Dichlorbenzyl, n-, iso-Nonyl, n-, iso-Decyl, n-, iso-Dodecyl, n-, iso-Tetradecyl, n-, iso-Hexadecyl, n-, iso-Octenyl, n-, iso-Nonenyl oder n-, iso-Decenyl. Besonders bevorzugt stehen $R^3$ oder $R^4$ unabhängig voneinander für Benzyl, $-CH_2-CH_2-O-CH_2-CH_2-OH$, $-[CH_2-CH_2-O]_2-CH_2-CH_2-OH$, $-[CH_2-CH_2-O]_3-CH_2-CH_2-OH$ , $-[CH_2-CH_2-O]_4-CH_2-CH_2-OH$, Dichlorbenzyl, n-, iso-Nonyl, n-, iso-Decyl, n-, iso-Dodecyl, n-, iso-Tetradecyl, n-, iso-Hexadecyl, n-, iso-Octenyl, n-, iso-Nonenyl oder n-, iso-Decenyl.

X stellt bevorzugt ein Halogenid, Carbonat, Hydrogencarbonat, Borat, Sulfat, Hydroxid oder Carboxylat dar. Besonders bevorzugt stellt X ein Chlorid, Hydrogencarbonat oder Carbonat dar. n ist bevorzugt 1, 2 oder 3.

Bevorzugt handelt es sich bei den Isothiazolinonen um N-Methylisothiazolin-3-on, 5-Chlor-N-methylisothiazolin-3-on, 4,5-Dichloro-N-octylisothiazolin-3-on (DCOIT), 5-Chlor-N-octylisothiazolinon, N-Octyl-isothiazolin-3-on, 4,5-Trimethylen-isothiazolinon und 4,5-Benzisothiazolinon. Besonders bevorzugt wird als Isothiazolinon 4,5-Dichloro-N-octylisothiazolin-3-on (DCOIT) eingesetzt.

3-Iod-2-propinyl-alkylcarbamat steht für 3-Iod-2-propinyl-N-butylcarbamat (IPBC),

3-Iod-2-propinyl-cycloalkylcarbamat steht bevorzugt für 3-Iod-2-propinyl-cyclohexylcarbamat.

3-Iod-2-propinyl-arylcarbamat steht bevorzugt für 3-Iod-2-propinyl-N-phenylcarbamat.

Die Verbindungen der Formel (III) stellen tertiäre Amine dar. Besonders bevorzugt stehen die Verbindungen der Formel (III) für N-(3-Aminopropyl)-N-dodecyl-1,3-propandiamin, N-(3-Aminopropyl)-N-decyl-1,3-propandiamin, N-(3-Aminopropyl)-N-tetradecyl-1,3-propandiamin sowie deren Säureadditionsverbindungen.

Unter Säureadditionsverbindungen der Verbindungen der Formel (III) werden insbesondere Addukte mit Halogenwasserstoffsäuren, z.B. Chlorwasserstoff und Bromwasserstoff, Carbonsäuren, wie z.B. Ameisensäure, Essigsäure, Weinsäure und Oxalsäure, Sulfonsäuren, wie z.B. p-Toluolsulfonsäure sowie Schwefelsäure, Phosphorsäure und Salpetersäure verstanden.

$R^5$ steht bevorzugt für n-, iso-Octyl, n-, iso-Nonyl, n-, iso-Decyl, n-, iso-Dodecyl, n-, iso-Hexadecyl, n-, iso-Octenyl, n-, iso-Nonenyl, n-, iso-Decenyl, Cyclopentyl oder Cyclohexyl.

Besonders bevorzugt steht $R^5$ für Dodecyl, Tetradecyl oder Decyl.
m steht bevorzugt für 2, 3 oder 4. y steht bevorzugt für 2, 3 oder 4.

Alkyl beziehungsweise Alkenyl stehen jeweils unabhängig für einen geradkettigen, zyclischen oder verzweigten Alkyl- beziehungsweise Akenyl-Rest.

$C_1$-$C_6$-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl und 1-Ethyl-2-methylpropyl. Bevorzugt steht $C_1$-$C_6$-Alkyl für Methyl, Ethyl, n-Propyl, iso-Propyl, n-Butyl, sec.-Butyl, tert.-Butyl, n-Pentyl, 1-Methylbutyl und n-Hexyl. $C_8$-$C_{18}$-Alkyl und/oder $C_6$-$C_{22}$-Alkyl stehen beispielsweise und vorzugsweise für n-, iso-Octyl, n-, iso-Nonyl, n-iso-Decyl, n-, iso-Dodecyl oder n-, iso-Hexadecyl.

Beispielhaft und vorzugsweise stehen $C_8$-$C_{18}$-Alkenyl und/oder $C_6$-$C_{22}$-Alkenyl für n-, iso-Octenyl, n-, iso-Nonenyl, n- oder iso-Decenyl oder aber auch für mehrfach ungesättigte $C_8$-$C_{18}$-Alkenylreste.

Beispielhaft und vorzugsweise steht $C_5$-$C_{20}$-Cycloalkyl für Cyclopentyl oder Cyclohexyl. $C_6$-$C_{24}$-Aryl steht im Rahmen der Erfindung für einen mono-, bi- oder trizyklischen carbozyklischen aromatischen Rest mit vorzugsweise 6 bis 24 aromatischen Kohlenstoffatomen, der gegebenenfalls durch Halogene weiter substituiert sein kann. Beispielhaft und bevorzugt steht $C_6$-$C_{24}$-Aryl für Biphenyl, Phenyl, o-, p-, m-Chlorbenzyl, Dichlorbenzyl, Naphthyl, o-, m-, p-Benzyl, o-, m-, p- Xylol oder o-, m-, p- Trimethylphenyl. Besonders bevorzugt stehen $C_6$-$C_{24}$-Aryl für o-, m-, p- Benzyl, o-, p-, m-Chlorbenzyl oder Dichlorbenzyl.

Bevorzugt sind Zusammensetzungen, die

a) Penflufen und dessen Salze oder Säureadditionsverbindungen und
b) mindestens eine Verbindung ausgewählt aus den Gruppen

o-Phenylphenol und dessen Alkali- und Erdalkalimetallsalze,

- der Borate:
  Alkalimetallborate, Erdalkalimetallborate, Borsäure, Boroxid, Borsäureanhydrid, oder Borsäureester,
- der organischen, quartären Ammoniumverbindungen: Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammmoniumchlorid, Dioctyldimethylammoniumchlorid, Hexadecyltrimethylammoniumchlorid, Didecyl-methylpoly(oxyethyl)ammoniumpropionat, Didecyldimethylammoniumcarbonat, Didecyldimethylammoniumhydrogencarbonat, 1-Hexadecyl-pyridinium-chlorid,
- der Isothiazolinone:

  N-Methylisothiazolin-3-on, 5-Chlor-N-methylisothiazolin-3-on, 4,5-Dichloro-N-octylisothiazolin-3-on (DCOIT), 5-Chlor-N-octylisothiazolinon, N-Octyl-isothiazolin-3-on, 4,5-Trimethylen-isothiazolinon und 4,5-Benzisothiazolinon,

- der Carbamate:

  3-Iod-2-propinyl-N-butylcarbamat,

- der tertiären Amine:

  N-(3-Aminopropyl)-N-dodecyl-propan-1,3-diamin, N-(3-Aminopropyl)-N-decyl-propan-1,3-diamin, N-(3-Aminopropyl)-N-tetradecyl-propan-1,3-diamin.

Besonders bevorzugt sind Zusammensetzungen, die

a) Penflufen und dessen Salze oder Säureadditionsverbindungen und

b) mindestens eine Verbindung ausgewählt aus der Gruppe o-Phenylphenol und dessen Alkali- und Erdalkalimetallsalze

Natriumborat, Borsäure, Boroxid, Borsäureanhydrid, Borsäureester,
**[0034]** Benzalkoniumchlorid, Didecyldimethylammoniumchlorid, Didecylmethylpoly(oxyethyl)-ammoniumpropionat, Didecyldimethylammoniumcarbonat, Didecyldimethylammonium-hydrogencarbonat,

4,5-Dichloro-N-octylisothiazolin-3-on,

3-Iod-2-propinyl-N-butylcarbamat,

N-(3-Aminopropyl)-N-dodecyl-propan-1,3-diamin

enthalten.

Ganz besonders bevorzugt sind Zusammensetzungen, die
Ganz besonders bevorzugt sind Zusammensetzungen, die

a) Penflufen und dessen Salze oder Säureadditionsverbindungen und

b) mindestens eine Verbindung ausgewählt aus der Gruppe o-Phenylphenol und dessen Alkali- und Erdalkalimetallsalze

Natriumborat, Borsäure, Boroxid, Mischungen mit Boroxid, Borax und Borsäure

Benzalkoniumchlorid, Didecyldimethylammoniumchlorid, Didecylmethylpoly(oxyethyl)-ammoniumpropionat, Didecyldimethylammoniumcarbonat, Didecyldimethylammoniumhydrogencarbonat oder eine Mischung aus Didecyldimethylammoniumcarbonat und Didecyldimethylammoniumhydrogencarbonat (Carboquat)

4,5-Dichloro-N-octylisothiazolin-3-on,

3-Iod-2-propinyl-N-butylcarbamat,

N-(3-Aminopropyl)-N-dodecyl-propan-1,3-diamin

enthalten.
Folgende Zusammensetzungen sind noch weiter bevorzugt:

**Tabelle 1**

| **Mischungspartner a) Penflufen** | **Mischungspartner b)** |
|---|---|
| Penflufen | Natriumborat |
| Penflufen | Borsäure |

(fortgesetzt)

| Mischungspartner a) Penflufen | Mischungspartner b) |
|---|---|
| Penflufen | Boroxid |
| Penflufen | Benzalkoniumchlorid |
| Penflufen | Didecyldimethylammoniumchlorid |
| Penflufen | Didecyldimethylammoniumcarbonat und Didecyldimethylammoniumhydrogencarbonat (Carboquat) |
| Penflufen | Didecylmethylpoly(oxyethyl)ammoniumpropionat |
| Penflufen | 4,5-Dichloro-N-octylisothiazolin-3-on |
| Penflufen | 3-Iod-2-propinyl-N-butylcarbamat |
| Penflufen | N-(3-Aminopropyl)-N-dodecyl-1,3- propandiamin |
| Penflufen | o-Phenylphenol |

Der Rahmen der Erfindung erfasst alle oben stehenden und im Folgenden aufgeführten allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

Eine besonders hohe synergistische Wirkung der vorgenannten Mischungen konnte insbesondere direkt auf den imprägnierten Holz oder Holzwerkstoffen, sowie der Holz-Plastik-Verbundstoffe gefunden werden.

Penflufen wird vorzugsweise zu einer Verbindung ausgewählt aus b) (Tabelle 1) im Gewichtsverhältnis von 50 : 1 bis 1 : 50, insbesondere von 20 : 1 bis 1 : 20, bevorzugt von 10 : 1 bis 1 : 10 eingesetzt.

Zudem wurde eine besondere synergistische Wirkung von Penflufen mit 3-Iod-2-propinyl-N-butylcarbamat und mit 4,5-Dichloro-N-octylisothiazolin-3-on bei bestimmten Mischungsverhältnissen festgestellt.

Daher ist besonders bevorzugt eine Zusammensetzungen aus Penflufen und 3-Iod-2-propinyl-N-butylcarbamat die 85 Gew.-% bis 75 % Gew.% Penflufen und 15 Gew.-% bis 25 % Gew.-% 3-Iod-2-propinyl-N-butylcarbamat enthält.

Besonders bevorzugt enthalten die Zusammensetzungen aus Penflufen und Isothiazolinonen mehr als 50 Gew.-% Penflufen. Ganz besonders bevorzugt enthalten die Mischungen mindestens 50 Gew.-% Penflufen und mindestens 10 Gew.-% 4,5-Dichloro-N-octylisothiazolin-3-on.

Die erfindungsgemäß eingesetzten Zusammensetzungen können fest oder flüssig zum Einsatz kommen. Dabei kommen Formulierungen wie Lösungen, Emulsionen, Suspensionen, Pulver, Granulate, Pasten, Aerosole sowie Feinstverkapselungen in polymeren Stoffen in Frage.

Solche Formulierungen können in bekannter Weise hergestellt werden, z.B. durch Vermischen der Zusammensetzungen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können auch organische Lösungsmittel als Hilfslösungsmittel mitverwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycerol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter normalem Druck gasförmig sind, z.B. Aerosol-Treibgase, wie Halogenkohlenwasserstoffe sowie Butan, Propan, Stickstoff und Kohlendioxid. Als feste Träger kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolit, Dolomit sowie synthetische Granulate aus anorganischem und organischem Mehlen sowie Granulate aus organischem Material wie Sägemehl, Kokosnussschalen, Maiskolben und Tabakstängeln. Als Emulgier- und/oder schaumerzeugende Mittel kommen in Frage: z.B. nichtionische und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Ligninsulfitablaugungen und Methylcellulose.

Es können in den Formulierungen zudem Haftmittel wie Carboxymethylcellulose, natürliche und synthetische,

pulverige, körnige oder latexförmige Polymere verwendet werden, wie Gummi arabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Die Zusammensetzungen können weiterhin Farbstoffe wie anorganische Pigmente, z.B. Eisenoxid, Titanoxid, Ferrocyanblau, Kupferoxid und organische Farbstoffe, wie Alizarin-, Azo- und Metallphthalocyaninfarbstoffe enthalten.

Die eingesetzte Zusammensetzung enthält im Allgemeinen vorzugsweise 0,1 bis 95 Gewichtsprozent der Komponenten a) und b), vorzugsweise 0,5 bis 90 Gew.-%.

Die verwendungsgemäßen Zusammensetzungen können auch noch weitere Wirkstoffe beispielsweise. Fungizide, Bakterizide und/oder Insektizide enthalten, um so z.B. das Wirkungs-spektrum zu verbreitern oder Resistenzentwicklungen vorzubeugen. In vielen Fällen erhält man dabei synergistische Effekte, d.h. die Wirksamkeit kombinierter Wirkstoffe ist größer als die Wirksamkeit der Einzelkomponenten.

Besonders günstige Mischungspartner sind z.B. die folgenden Verbindungen:

Triazole wie:

Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte;

Imidazole wie:

Clotrimazol, Bifonazol, Climbazol, Econazol, Fenapanil, Imazalil, Isoconazol, Ketoconazol, Lombazol, Miconazol, Pefurazoat, Prochloraz, Triflumizol sowie deren Metallsalze und Säureaddukte;

Pyridine und Pyrimidine wie:

Ancymidol, Buthiobate, Fenarimol, Mepanipyrin, Nuarimol, Pyroxyfur, Triamirol ;

Succinat-Dehydrogenase Inhibitoren wie:

Benodanil, Bixafen, Boscalid, Carboxim, Carboximsulfoxid, Cyclafluramid, Fenfuram, Flutanil, Furametpyr, Furcarbanil, Furmecyclox, Mebenil, Mepronil, Methfuroxam, Metsulfovax, Nicobifen, Pyrocarbolid, Oxycarboxin, Shirlan, Seedvax;

Naphthalin-Derivate wie:

Terbinafine, Naftifine, Butenafine, 3-Chloro-7-(2-aza-2,7,7-trimethyl-oct-3-en-5-in);

Sulfenamide wie:

Dichlofluanid, Tolylfluanid, Folpet, Fluorfolpet; Captan, Captofol;

Benzimidazole wie:

Carbendazim, Benomyl, Fuberidazol, Thiabendazol oder deren Salze;

Morpholinderivate wie:

Aldimorph, Dimethomorph, Dodemorph, Falimorph, Fenpropidin Fenpropimorph, Tridemorph, Trimorphamid und ihre arylsulfonsauren Salze, wie z.B. p-Toluolsulfonsäure und p-Dodecylphenylsulfonsäure;

Benzthiazole wie:

2-Mercaptobenzothiazol;

Benzthiophendioxide wie:

Benzo[b]thiophen-S,S-dioxid-carbonsäurecyclohexylamid;

Benzamide wie:

2,6-Dichloro-N-(4-trifluoromethylbenzyl)-benzamide, Tecloftalam;

Borverbindungen wie:

Borsäure, Borsäureester, Borax;

Formaldehyd und formaldehydabspaltende Verbindungen wie:

Benzylalkoholmono-(poly)-hemiformal, n-Butanol-hemiformal, Dazomet, Ethylenglycol-hemiformal, Hexa-hydro-S-triazine, Hexamethylentetramin, N-Hydroxymethyl-N'-methylthioharnstoff, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff;

Isothiazolinone wie:

N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinone, 4,5-Benzisothiazolinone;

Aldehyde wie:

Zimtaldehyd, Formaldehyd, Glutardialdehyd, ß-Bromzimtaldehyd, o-Phthaldialdehyd;

Thiocyanate wie:

Thiocyanatomethylthiobenzothiazol, Methylenbisthiocyanat;

quartäre Ammoniumverbindungen und Guanidine wie:

Benzalkoniumchlorid, Benzyldimethyltetradecylammoniumchlorid, Benzyldimethyldodecylammoniumchlorid, Dichlorbenzyl-dimethyl-alkyl-ammoniumchlorid, Didecyldimethylammoniumchlorid, Dioctyl-dimethyl-ammoniumchlorid, N-Hexadecyl-trimethyl-ammoniumchlorid, 1-Hexadecyl-pyridinium-chlorid, Iminoctadine-tris(albesilate);

Iodderivate wie:

Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexyl-carbamat, 3-Iod-2-propinyl-phenylcarbamat;

Phenole wie:

Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;

Mikrobizide mit aktivierter Halogengruppe wie:

Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, ß-Brom-ß-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;

Pyridine wie:

1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;

Methoxyacrylate oder ähnliches wie:

Azoxystrobin, Dimoxystrobin, Fluoxastrobin, Kresoxim-methyl, Metominostrobin, Orysastrobin, Picoxystrobin, Pyraclostrobin, Trifloxystrobin;

Metallseifen wie:

Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, - benzoat;

Metallsalze wie:

Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;

Oxide wie:

Oxide der Metalle Zinn, Kupfer und Zink wie z.B. Tributylzinnoxid, $Cu_2O$, CuO, ZnO;

Oxidationsmittel wie:

Wasserstoffperoxid, Peressigsäure, Kaliumpersulfat;

Dithiocarbamate wie:

Cufraneb, Ferban, Kalium-N-hydroxymethyl-N'-methyl-dithiobarbamat, Na- oder K-dimethyldithiocarbamat, Mancozeb, Maneb, Metam, Metiram, Thiram, Zineb, Ziram;

Nitrile wie:

2,4,5,6-Tetrachlorisophthalodinitril, Dinatrium-cyano-dithioimidocarbamat;

Chinoline wie:

8-Hydroxychinolin und deren Cu-Salze;

sonstige Fungizide und Bakterizide wie:

Bethozaxin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer, Iprovalicarb, Fenhexamid, Spiroxamine, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenone, Cyflufenamid, Tiadinil, Teebaumöl, Phenoxyethanol,
Ag, Zn oder Cu-haltige Zeolithe allein oder eingeschlossen in polymere Werkstoffe.

Insektizide:

Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,

Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,

Cadusafos, Carbaryl, Carbofuran, Carbophenothion, Carbosulfan, Cartap, Chinomethionat, Cloethocarb, 4-Chlor-2-(2-chlor-2-methylpropyl)-5-[(6-iod-3 -pyridinyl)methoxy]-3(2H)- pyridazinone (CAS-RN: 120955-77-3), Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimid-amide, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialone, Diflubenzuron, Dimethoat, 3,5-Dimethylphenyl-methylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
Eflusilanate, Emamectin, Empenthrin, Endosulfan, *O*-Ethyl-*O*-(4-nitrophenyl)-*P*-phenylphosphonothioat, Esfenvalerat, Ethiofencarb, Ethion, Etofenprox, Etrimphos, Etoxazole, Etobenzanid,
Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
Halofenocid, HCH (CAS RN: 58-89-9), Heptenophos, Hexaflumuron, Hexythiazox, Hydramethylnon, Hydroprene,
Imidacloprid, Imiprothrin, Indoxycarb, Iodfenfos, Iprinomectin, Iprobenfos, Isazophos, Isoamidophos, Isofenphos, Isoprocarb, Isoprothiolane, Isoxathion, Ivermectin, Lama-cyhalothrin, Lufenuron,
Kadedrin,
Lambda-Cyhalothrin, Lufenuron,
Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
Naled, Nicotin, Nitenpyram, Noviflumuron,
Omethoat, Oxamyl, Oxydemethon M, Oxydeprofos,
Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium
Quinalphos,
Resmethrin, Rotenone,
Salithion, Sebufos, Silafluofen, Spinosad, Spirodiclofen, Spiromesifen, Sulfotep, Sulprofos,
Tau-fluvalinate, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,
Vamidothion, Xylylcarb, Zetamethrin;

Herbizide und Algizide:

Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryne, Azimsulfuron,

Benazolin, Benfluralin, Benfuresate, Bensulfuron, Bensulfide, Bentazone, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylate, Bialaphos, Benzoyl-prop, Bromobutide, Butroxydim,

Carbetamide, Carfentrazone-ethyl, Carfenstrole, Chlomethoxyfen, Chloramben, Chlorbromuron, Chlorflurenol, Chloridazon, Chlorimuron, Chlornitrofen, Chloroacetic acid, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cybutryne, Cycloate, Cycloxydim, Chloroxynil, Clodinafop-propargyl, Cumyluron, Clometoxyfen, Cyhalofop, Cyhalofop-butyl, Clopyrasuluron, Cyclosulfamuron,

Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC (2-methyl-4,6-dinitrophenol), DSMA (Dinatrium methylarsonat), (2,4-dichlorophenoxy)essigsäure, Daimuron, Dalapon, Dazomet, 2,4-DB (4-(2,4-dichlorphenoxy)butansäure), Desmedipham, Desmetryn, Dicamba, Dichlobenil, Dimethamid, Dithiopyr, Dimethametryn,

Eglinazine, Endothal, EPTC (*S*-Ethyldipropylthiocarbamat), Esprocarb, Ethalfluralin, Ethidimuron, Ethofumesate, Ethobenzanid, Ethoxyfen, Ethametsulfuron, Ethoxysulfuron,

Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamone, Flumioxzim, Flupyrsulfuron-methyl, Fluthiacet-methyl,

Glyphosate, Glufosinate-ammonium

Haloxyfop, Hexazinone,

Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,

Ketospiradox,

Lactofen, Lenacil, Linuron,

MCPA (2-(4-chloro-2-methylphenoxy)essigsäure), MCPA-hydrazid, MCPA-thioethyl, MCPB (4-(4-chlor-2-methylphenoxy)butansäure), Mecoprop, Mecoprop-P, Mefenacet, Mefluidide, Mesosulfuron, Metam, Metamifop, Metamitron, Metazachlor, Methabenzthiazuron, Methazole, Methoroptryne, Methyldymron, Methylisothiocyanate, Metobromuron, Metoxuron, Metribuzin, Metsulfuron, Molinate, Monalide, Monolinuron, MSMA (Natriumhydrogenmethylarsonat), Metolachlor, Metosulam, Metobenzuron,

Naproanilide, Napropamide, Naptalam, Neburon, Nicosulfuron, Norflurazon, Natriumchlorat,

Oxadiazon, Oxyfluorfen, Oxysulfuron, Orbencarb, Oryzalin, Oxadiargyl,

Propyzamide, Prosulfocarb, Pyrazolate, Pyrazolsulfuron, Pyrazoxyfen, Pyribenzoxim, Pyributicarb, Pyridate, Paraquat, Pebulate, Pendimethalin, Pentachlorophenol, Pentoxazone, Pentanochlor, Petroleum oils, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,

Quinmerac, Quinocloamine, Quizalofop, Quizalofop-P, Quinchlorac,
Rimsulfuron

Sethoxydim, Sifuron, Simazine, Simetryn, Sulfosulfuron, Sulfometuron, Sulfentrazone, Sulcotrione, Sulfosate,

Teeröle, TCA (Trichloressigsäure), TCA-Natrium, Tebutam, Tebuthiuron, Terbacil, Terbumeton, Terbuthylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thidiazimin, Thiazopyr, Triflusulfuron,

Vernolate.

Die Erfindung betrifft weiterhin die Verwendung der erfindungsgemäßen Zusammensetzungen zum Schutz von technischen Materialien vor Befall und/oder Zerstörung durch Mikroorganismen.

Unter technischen Materialien sind im vorliegenden Zusammenhang nichtlebende Materialien zu verstehen, die für die Verwendung in der Technik zubereitet worden sind. Beispielsweise können technische Materialien, die durch diese Erfindung vor mikrobieller Veränderung oder Zerstörung geschützt werden sollen, Klebstoffe, Leime, Papier und Karton, Textilien, Leder, Holz, Holzwerkstoffe, Holz-Plastik-Verbundstoffe, Anstrichmittel, Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Holzwerkstoffe, Holz-Plastikverbundstoffe, Anstrichmittel, Kühlschmiermittel und Wärmeübertragungsflüssigkeiten genannt, besonders bevorzugt sind als technische Materialien Holz, Holzwerkstoffe und Holz-Plastik-Verbundstoffe (sogenannte Wood-Plastic Composites WPC).

Unter Holz wird insbesondere verstanden: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfernster und -türen, Tischlerarbeiten und Holzprodukte, die beim Hausbau oder in der Bautischlerei Verwendung finden.

Unter Holzwerkstoffen wird insbesondere verstanden: Sperrholz, Spanplatten, Faserplatten, OSB-Platten (oriented strand board) oder Verbundplatten.

Unter Holz-Plastik-Verbundstoff wird insbesondere verstanden: thermoplastisch prozessierbare Verbundwerkstoffe bestehend aus Holz, Kunststoff und Additiven.

Besonders bevorzugt ist Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Zusammensetzungen gegen holzzerstörende Basidiomyceten, vorzugsweise Holobasidiomyceten.

Hierbei seien insbesondere Pilze der folgenden Gattungen genannt:

Coniophora, wie Coniophora puetana,
Lentinus, wie Lentinus tigrinus,
Polyporus, wie Polyporus versicolor,
Gloeophyllum, wie Gloeophyllum trabeum,
Poria, wie Poria placenta,
Coriolus, wie Coriolus versicolor,
Stereum, wie Stereum sanguinolentum.
Arten der Gattung Glenospora wie Glenospora graphii,
Arten der Gattung Chaetomium wie Chaetomium globosum,
Arten der Gattung Humicola wie Humicola grisea,
Arten der Gattung Petriella wie Petriella setifera,
Arten der Gattung Trichurus wie Trichurus spiralis,
Arten der Gattung Lecythophora wie Lecythophora mutabilis
Arten der Gattung Sclerophoma wie Sclerophoma pityophila
Arten der Gattung Aureobasidium wie Aureobasidium pullulans.

Die Erfindung betrifft weiterhin technische Materialien insbesondere Holz, Holzwerkstoff oder Holz-Plastik-Verbundstoff enthaltend

a) Penflufen und dessen Salze oder Säureadditionsverbindungen und
b) mindestens eine Verbindung ausgewählt aus der Gruppe o-Phenylphenol und dessen Alkali- und Erdalkalimetallsalze, Borverbindungen, Verbindungen der Formel (II)

$$((R^1R^2R^3R^4)N)_nX \qquad \text{(II)}$$

wobei

$R^1$ und $R^2$ gleich oder verschieden sein können und unabhängig voneinander für $C_1$-$C_6$-Alkyl stehen und
$R^3$ und $R^4$ gleich oder verschieden sein können und unabhängig voneinander ausgewählt sind aus der Gruppe $C_6$-$C_{22}$-Alkyl, $C_6$-$C_{22}$-Alkenyl, $C_6$-$C_{24}$-Aryl, $C_5$-$C_{20}$-Cycloalkyl oder Reste der Formel (IV) $-[CH_2-CH_2-O]_z-CH_2-CH_2-OH$ (IV) wobei z = 1, 2, 3, 4, 5, 6, 7, 8, 9 oder 10 ist und
X ein n-fach geladenes Anion ist und
n eine beliebige ganze Zahl größer als Null darstellt, Isothiazolinone, 3-Iod-2-propinyl-N-butylcarbamate, 3-Iod-2-propinyl-cycloalkylcarbamate, 3-Iod-2-propinyl-arylcarbamat und Verbindungen der Formel (III)

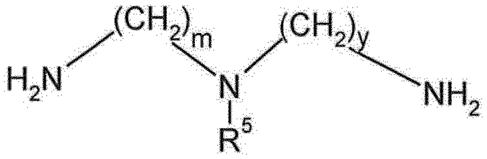

(III)

in der
$R^5$ $C_8$-$C_{18}$-Alkyl, $C_8$-$C_{18}$-Alkenyl oder $C_5$-$C_{20}$-Cycloalkyl und
m und y gleich und verschieden sein können und eine Zahl 1, 2, 3, 4, 5 oder 6 darstellen sowie deren Säureadditionsverbindungen.

Die Erfindung betrifft weiterhin ein Verfahren zum Schutz von technischen Materialien vor Befall und/oder Zerstörung durch Mikroorganismen, dadurch gekennzeichnet, dass man wenigstens eine Zusammensetzung, enthaltend

a) Penflufen und dessen Salze oder Säureadditionsverbindungen und
b) mindestens eine Verbindung ausgewählt aus der Gruppe o-Phenylphenol und dessen Alkali- und Erdalkalimetallsalze , Borverbindungen, Verbindungen der Formel (II)

$$((R^1R^2R^3R^4)N)_nX \qquad (II)$$

wobei

$R^1$ und $R^2$ gleich oder verschieden sein können und unabhängig voneinander für $C_1$-$C_6$-Alkyl stehen und

$R^3$ und $R^4$ gleich oder verschieden sein können und unabhängig voneinander ausgewählt sind aus der Gruppe $C_6$-$C_{22}$-Alkyl, $C_6$-$C_{22}$-Alkenyl, $C_6$-$C_{24}$-Aryl, $C_5$-$C_{20}$-Cycloalkyl oder Reste der Formel (IV) $-[CH_2-CH_2-O]_z-CH_2-CH_2-OH$ (IV) wobei z = 1, 2, 3, 4, 5, 6, 7, 8, 9 oder 10 ist und

X ein n-fach geladenes Anion ist und

n eine beliebige ganze Zahl größer als Null darstellt, Isothiazolinone, 3-Iod-2-propinyl-N-butylcarbamate, 3-Iod-2-propinyl-cycloalkylcarbamate, 3-Iod-2-propinyl-arylcarbamat und Verbindungen der Formel (III)

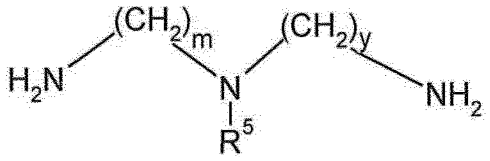

(III)

in der

$R^5$ $C_8$-$C_{18}$-Alkyl, $C_8$-$C_{18}$-Alkenyl oder $C_5$-$C_{20}$-Cycloalkyl

m und y gleich und verschieden sein können und eine Zahl 1, 2, 3, 4, 5 oder 6 darstellen, sowie deren Säureadditionsverbindungen,

auf den Mikroorganismus oder dessen Lebensraum einwirken lässt, wobei die oben genannten bevorzugten Ausführungsformen auch hier gelten.

Bei dem erfindungsgemäßen Verfahren bzw. bei der Verwendung werden die Zusammensetzungen vorzugsweise durch Streichen, Tränken, Besprühen, Imprägnieren oder in sonstiger Weise auf das technische Material aufgetragen.
Bei Holz sind bevorzugt großtechnische Imprägnierverfahren, zum Beispiel das Vakuum-, Doppelvakuum-, Vakuumdruck- oder Druckverfahren.

Holz-Plastik-Verbundstoffe können bspw. dadurch hergestellt werden, dass man Holzpartikel, ein thermoplastisches Polymer und die Zusammensetzungen unter thermischer Energie vermischt, insbesondere extrudiert oder spritzgießt.

Holzwerkstoffe können beispielsweise mit dem Leimuntermischverfahren behandelt werden. Dabei wird die erfindungsgemäße Zusammensetzung ggf. in Form einer Formulierung der Leimflotte beigegeben und dieser biozidausgerüstete Leim wie üblich auf die Späne aufgebracht, insbesondere aufgedüst (z.B. bei Span- oder OSB-Platten) oder über Walzen auf die Furniere aufgebracht (z.B. bei Sperrholz). Beim Oberflächenverfahren wird die erfindungsgemäße Bei Holz sind bevorzugt großtechnische Imprägnierverfahren, zum Beispiel das Vakuum-, Doppelvakuum-, Vakuumdruck- oder Druckverfahren.

Holz-Plastik-Verbundstoffe können bspw. dadurch hergestellt werden, dass man Holzpartikel, ein thermoplastisches Polymer und die Zusammensetzungen unter thermischer Energie vermischt, insbesondere extrudiert oder spritzgießt.

Holzwerkstoffe können beispielsweise mit dem Leimuntermischverfahren behandelt werden. Dabei wird die erfindungsgemäße Zusammensetzung ggf. in Form einer Formulierung der Leimflotte beigegeben und dieser biozidausgerüstete Leim wie üblich auf die Späne aufgebracht, insbesondere aufgedüst (z.B. bei Span- oder OSB-Platten) oder über Walzen auf die Furniere aufgebracht (z.B. bei Sperrholz). Beim Oberflächenverfahren wird die erfindungsgemäße Zusammensetzung ggf. in Form einer Formulierung auf den Holzwerkstoff aufgesprüht oder mit einer Walze aufgetragen.

Die Anwendungskonzentrationen der erfindungsgemäßen Zusammensetzungen richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im Allgemeinen liegen die Anwendungskonzentrationen im Bereich von 0,001 bis 5 Gewichts%, vorzugsweise von 0,005 bis 1,0 Gewichts% der Zusammensetzung und ggfs. weiterer Zusätze, bezogen auf das zu schützende Material.

Im industriellen Holzschutz wird beispielsweise 10 bis 500 g Wirkstoff pro $m^3$ Holz, vorzugsweise 50 bis 300 $g/m^3$ und ggfs. weiterer Zusätze eingesetzt.

Überraschenderweise wurden neue Zusammensetzungen gefunden, die in synergistischer Weise gegen Mikroorganismen wirken. Dadurch kann der Schutz von technischen Materialien verbessert werden und die Menge an einzusetzenden Wirkstoffen wird reduziert.

Die folgenden Beispiele dienen der beispielhaften Erläuterung der Erfindung.

## Beispiele

### Synergismus-Tests

Aus einer Kolonie des entsprechenden holzzerstörenden Pilzes wurden Mycelstücke ausgestochen und auf einem Malzextrakt-Pepton-haltigen Nähragar bei 26°C inkubiert. Hierbei wurde das Hyphenwachstum mit und ohne Wirkstoff verglichen. Als Minimale Hemmkonzentration (MHK) wurde die Konzentration angegeben, welche das radiale Hyphenwachstum völlig unterdrückt.

Nach der von Kull et al. (F.C. Kull, P.C. Eismann, H.D. Sylvestrowicz, R.L. Mayer, Applied Microbiology 1961, 9, 538-541) beschriebenen Methode wurde der Synergismus ermittelt. Dabei gelten folgende Beziehungen: 10

$$\frac{Q_A}{Q_a} + \frac{Q_B}{Q_b} = SI$$

SI = 1 bedeutet Additivität
SI > 1 bedeutet Antagonismus
SI < 1 bedeutet Synergismus
$Q_a$ = Konzentration von Substanz A, welche die MHK darstellt
$Q_b$ = Konzentration von Substanz B, welche die MHK darstellt
$Q_A$ = Konzentration von Substanz A in der Konzentration von A/B, die das Mikrobenwachstum unterbindet
$Q_B$ = Konzentration von Substanz B in der Konzentration von A/B, die das Mikrobenwachstum unterbindet

## Beispiel 1

**Kombinationen von Penflufen und 3-Iod-2-propinyl-N-butylcarbamat (IPBC) gegen den Holzdestruenten Gloeophyllum trabeum**

| | MHK gegen Gloeophyllum trabeum (ppm) | SI |
|---|---|---|
| Penflufen | 0,3 | - |
| Penflufen : IPBC 9 : 1 | 0,3 | 0,90 |
| Penflufen : IPBC 4 : 1 | 0,1 | 0,27 |
| Penflufen : IPBC 7 : 3 | 0,3 | 0,71 |
| Penflufen : IPBC 3 : 2 | 0,1 | 0,61 |
| Penflufen : IPBC 1 : 1 | 0,3 | 0,52 |
| Penflufen : IPBC 2 : 3 | 0,3 | 0,42 |
| Penflufen : IPBC 3 : 7 | 0,3 | 0,32 |
| Penflufen : IPBC 1 : 4 | 0,5 | 0,37 |
| Penflufen : IPBC 1 : 9 | 0,7 | 0,30 |
| IPBC | 10,0 | - |

**Beispiel 2**

**Kombinationen von Penflufen und 4,5-Dichloro-N-octylisothiazolin-3-on (DCOIT) gegen den Holzdestruenten Poria placenta**

| | MHK gegen Poria placenta (ppm) | SI |
|---|---|---|
| Penflufen | 0,3 | - |
| Penflufen : DCOIT 9 : 1 | 0,1 | 0,30 |
| Penflufen : DCOIT 4 : 1 | 0,1 | 0,27 |
| Penflufen : DCOIT 7 : 3 | 0,1 | 0,23 |
| Penflufen : DCOIT 3 : 2 | 0,1 | 0,20 |
| Penflufen : DCOIT 1 : 1 | 0,3 | 0,51 |
| Penflufen : DCOIT 2 : 3 | 0,3 | 0,41 |
| Penflufen : DCOIT 3 : 7 | 0,3 | 0,31 |
| Penflufen : DCOIT 1 : 4 | 0,5 | 0,35 |
| Penflufen : DCOIT 1 : 9 | 1,0 | 0,38 |
| DCOIT | 20,0 | - |

**Beispiel 3**

**Kombinationen von Penflufen und N-(3-Aminopropyl)-N-dodecyl-1,3-propandiamin (Lonzabac) gegen den Holzdestruenten Coriolus versicolor**

| | MHK gegen Coriolus versicolor (ppm) | SI |
|---|---|---|
| Penflufen | 0,5 | - |
| Penflufen : Lonzabac 9 : 1 | 0,3 | 0,54 |

(fortgesetzt)

| | MHK gegen Coriolus versicolor (ppm) | SI |
|---|---|---|
| Penflufen : Lonzabac 4 : 1 | 0,3 | 0,48 |
| Penflufen : Lonzabac 7 : 3 | 0,3 | 0,42 |
| Penflufen : Lonzabac 3 : 2 | 0,5 | 0,60 |
| Penflufen : Lonzabac 1 : 1 | 0,1 | 0,10 |
| Penflufen : Lonzabac 2 : 3 | 0,1 | 0,08 |
| Lonzabac | 30,0 | - |

**Beispiel 4**

**Kombinationen von Penflufen und Didecyldimethylammoniumchlorid (DDAC) gegen die Holzdestruenten Coriolus versicolor und Poria placenta**

| | | MHK (ppm) | | SI | |
|---|---|---|---|---|---|
| | | Coriolus versicolor | Poria placenta | Coriolus versicolor | Poria placentaa |
| Penflufen | | 0,1 | 0,1 | | |
| Penflufen : DDAC | 7 : 3 | 0,1 | 0,1 | 0,70 | 0,70 |
| Penflufen : DDAC | 6 : 4 | 0,1 | 0,1 | 0,60 | 0,60 |
| Penflufen : DDAC | 1 : 1 | 0,1 | 0,1 | 0,50 | 0,50 |
| Penflufen : DDAC | 4 : 6 | 0,1 | 0,1 | 0,40 | 0,40 |
| Penflufen : DDAC | 3 : 7 | 0,1 | 0,1 | 0,30 | 0,30 |
| Penflufen : DDAC | 2 : 8 | 0,1 | 0,1 | 0,20 | 0,20 |
| Penflufen : DDAC | 1 : 9 | 0,3 | 0,3 | 0,30 | 0,69 |
| DDAC | | 60,0 | 100,0 | | |

**Beispiel 5**

**Kombinationen von Penflufen und Didecylmethylpoly(oxyethyl)ammoniumpropionat (DDA propionat) gegen die Holzdestruenten Stereum sanguinolentum und Poria placenta**

| | | MHK (ppm) | | SI | |
|---|---|---|---|---|---|
| | | Stereum sanguinolentumm | Poria placenta | Stereum sanguinolentumm | Poria placenta |
| Penflufen | | 3,0 | 0,3 | | |
| Penflufen: DDA propionat | 8:2 | 0,7 | 0,1 | 0,19 | 0,27 |
| Penflufen: DDA propionat | 7:3 | 0,7 | 0,3 | 0,17 | 0,70 |
| Penflufen: DDA propionat | 6:4 | 3,0 | 0,1 | 0,64 | 0,20 |

(fortgesetzt)

| | | MHK (ppm) | | SI | |
|---|---|---|---|---|---|
| | | Stereum sanguinolentumm | Poria placenta | Stereum sanguinolentumm | Poria placenta |
| Penflufen: DDA propionat | 1:1 | 3,0 | 0,1 | 0,55 | 0,17 |
| Penflufen : DDA propionat | 4:6 | 3,0 | 0,3 | 0,46 | 0,40 |
| Penflufen: DDA propionat | 3:7 | 1,0 | 0,5 | 0,12 | 0,50 |
| Penflufen: DDA propionat | 2:8 | 3,0 | 0,7 | 0,28 | 0,47 |
| Penflufen: DDA propionat | 1:9 | 3,0 | 0,7 | 0,19 | 0,24 |
| DDA propionat | | 30,0 | 100,0 | | |

**Beispiel 6**

**Kombinationen von Penflufen und Benzalkoniumchlorid gegen den Holzdestruenten Poria placenta**

| | MHK gegen Poria placenta (ppm) | SI |
|---|---|---|
| Penflufen | 0,3 | - |
| Penflufen : Benzalkoniumchlorid 1 : 1 | 0,3 | 0,50 |
| Penflufen : Benzalkoniumchlorid 4 : 6 | 0,3 | 0,40 |
| Penflufen : Benzalkoniumchlorid 3 : 7 | 0,.5 | 0,50 |
| Penflufen : Benzalkoniumchlorid 2 : 8 | 0,5 | 0,34 |
| Penflufen : Benzalkoniumchlorid 1 : 9 | 1,0 | 0,34 |
| Benzalkoniumchlorid | 100,0 | - |

**Beispiel 7**

**Kombinationen von Penflufen und einer Mischung aus Didecyldimethylammoniumcarbonat und Didecyldimethylhydrogencarbonat (Carboquat) gegen die Holzdestruenten Stereum sanguinolentum und Poria placenta**

| | | MHK (ppm) | | SI | |
|---|---|---|---|---|---|
| | | Stereum sanguinolentumm | Poria placentaa | Stereum sanguinolentumm | Poria placentaa |
| Penflufen | | 3,0 | 0,3 | | |
| Penflufen : Carboquat | 7 : 3 | 3,0 | 0,3 | 0,7 | 0,7 |
| Penflufen : Carboquat | 6 : 4 | 1,0 | 0,3 | 0,2 | 0,6 |

(fortgesetzt)

| | | MHK (ppm) | | SI | |
|---|---|---|---|---|---|
| | | Stereum sanguinolentumm | Poria placentaa | Stereum sanguinolentumm | Poria placentaa |
| Penflufen : Carboquat | 1 : 1 | 3,0 | 0,3 | 0,6 | 0,5 |
| Penflufen : Carboquat | 4 : 6 | 3,0 | 0,3 | 0,5 | 0,4 |
| Penflufen : Carboquat | 3 : 7 | 3,0 | 0,5 | 0,4 | 0,5 |
| Penflufen : Carboquat | 2 : 8 | 3,0 | 1,0 | 0,3 | 0,7 |
| Carboquat | 7 : 3 | 30,0 | 30,0 | | |

**Beispiel 8**

**Kombinationen von Penflufen und Boroxid ($B_2O_3$) gegen den Holzdestruenten Coniophora puteana**

| | MHK gegen Coniophora puteana (ppm) | SI |
|---|---|---|
| Penflufen | 0,7 | - |
| Penflufen : Boroxid 7 : 3 | 0,3 | 0,30 |
| Penflufen : Boroxid 6 : 4 | 0,5 | 0,43 |
| Penflufen : Boroxid 1 : 1 | 1,0 | 0,72 |
| Penflufen : Boroxid 4 : 6 | 0,7 | 0,40 |
| Boroxid | 100 | - |

**Beispiel 9**

**Kombinationen von Penflufen und Borsäure gegen die Holzdestruenten Coriolus versicolor und Gloeophyllum trabeum**

| | | MHK (ppm) | | SI | |
|---|---|---|---|---|---|
| | | Coriolus versicolor | Gloeophyllum trabeum | Coriolus versicolor | Gloeophyllum trabeum |
| Penflufen | | 0,1 | 0,3 | | |
| Penflufen : Borsäure | 7 : 3 | 0,1 | 0,3 | 0,70 | 0,70 |
| Penflufen : Borsäure | 6 : 4 | 0,1 | 0,3 | 0,60 | 0,60 |
| Penflufen : Borsäure | 1 : 1 | 0,1 | 0,3 | 0,50 | 0,50 |
| Penflufen : Borsäure | 4 : 6 | 0,1 | 0,5 | 0,40 | 0,67 |

(fortgesetzt)

| | | MHK (ppm) | | SI | |
|---|---|---|---|---|---|
| | | **Coriolus versicolor** | **Gloeophyllum trabeum** | **Coriolus versicolor** | **Gloeophyllum trabeum** |
| Penflufen : Borsäure | 3 : 7 | 0,1 | 0,7 | 0,30 | 0,70 |
| Penflufen : Borsäure | 2 : 8 | 0,1 | 0,7 | 0,20 | 0,47 |
| Penflufen : Borsäure | 1 : 9 | 0,3 | | 0,30 | |
| Borsäure | | 100,0 | 100,0 | | |

## Beispiel 10

**Kombinationen von Penflufen und Natriumborat gegen den Holzdestruenten Poria placenta**

| | MHK gegen Poria placenta (ppm) | SI |
|---|---|---|
| Penflufen | 0,3 | - |
| Penflufen : Natriumborat 9 : 1 | 0,1 | 0,30 |
| Penflufen : Natriumborat 8 : 2 | 0,1 | 0,27 |
| Penflufen : Natriumborat 7 : 3 | 0,1 | 0,23 |
| Penflufen : Natriumborat 6 : 4 | 0,1 | 0,20 |
| Penflufen : Natriumborat 1 : 1 | 0,1 | 0,17 |
| Penflufen : Natriumborat 4 : 6 | 0,1 | 0,13 |
| Penflufen : Natriumborat 3 : 7 | 0,1 | 0,10 |
| Penflufen : Natriumborat 2 : 8 | 0,1 | 0,07 |
| Penflufen : Natriumborat 1 : 9 | 0,5 | 0,17 |
| Natriumborat | 100,0 | - |

## Beispiel 11

**Kombinationen von Penflufen und o-Phenylphenol gegen den Holzdestruenten Gloeophyllum trabeum**

| | MHK gegen Gloeophyllum trabeum (ppm) | SI |
|---|---|---|
| Penflufen | 0,7 | - |
| Penflufen : o-Phenylphenol 7 : 3 | 0,7 | 0,70 |
| Penflufen : o-Phenylphenol 6 : 4 | 0,5 | 0,43 |
| Penflufen : o-Phenylphenol 1 : 1 | 1,0 | 0,72 |
| Penflufen : o-Phenylphenol 4 : 6 | 0,7 | 0,41 |
| Penflufen : o-Phenylphenol 3 : 7 | 0,7 | 0,31 |
| Penflufen : o-Phenylphenol 2 : 8 | 1,0 | 0,30 |
| Penflufen : o-Phenylphenol 1 : 9 | 3,0 | 0,47 |

(fortgesetzt)

| | MHK gegen Gloeophyllum trabeum (ppm) | SI |
|---|---|---|
| o-Phenylphenol | 60,0 | - |

**Patentansprüche**

1. Zusammensetzungen, enthaltend

   a) Penflufen und dessen Salze oder Säureadditionsverbindungen
   und
   b) mindestens eine Verbindung ausgewählt aus der Gruppe
   o-Phenylphenol und dessen Alkali- und Erdalkalimetallsalze, Borverbindungen, Verbindungen der Formel (II)

   $$((R^1R^2R^3R^4)N)_nX \qquad (II)$$

   wobei

   $R^1$ oder $R^2$ gleich oder verschieden sein können und unabhängig voneinander für $C_1$-$C_6$-Alkyl stehen und $R^3$ oder $R^4$ gleich oder verschieden sein können und unabhängig voneinander ausgewählt sind aus der Gruppe $C_6$-$C_{22}$-Alkyl, $C_6$-$C_{22}$-Alkenyl, $C_6$-$C_{24}$-Aryl, $C_5$-$C_{20}$-Cycloalkyl oder Reste der Formel (IV)

   $$-[CH_2-CH_2-O]_z-CH_2-CH_2-OH \qquad (IV)$$

   wobei z = 1, 2, 3, 4, 5, 6, 7, 8, 9 oder 10 ist und
   X ein n-fach geladenes Anion ist und
   n eine beliebige ganze Zahl größer als Null darstellt, Isothiazolinone, 3-Iod-2-propinyl-N-butylcarbamat, 3-Iod-2-propinyl-cycloalkylcarbamate, 3-Iod-2-propinyl-arylcarbamat und Verbindungen der Formel (III)

   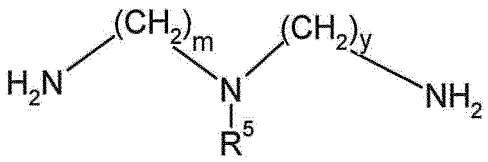 (III)

   in der $R^5$ $C_8$-$C_{18}$-Alkyl, $C_8$-$C_{18}$-Alkenyl oder $C_5$-$C_{20}$-Cycloalkyl und m und y gleich und verschieden sein können und eine Zahl 1, 2, 3, 4, 5 oder 6 darstellen sowie deren Säureadditionsverbindungen.

2. Zusammensetzung gemäß Anspruch 1, **dadurch gekennzeichnet, dass** die Borverbindung ausgewählt wird aus der Gruppe Dinatriumtetraborat Decahydrat (Borax), Borsäure, Borsäureester, Boroxid und Dinatriumoctaborat Tetrahydrat.

3. Zusammensetzung gemäß mindestens einem der Ansprüche 1 oder 2, **dadurch gekennzeichnet, dass** das Isothiazolinon ausgewählt wird aus der Gruppe N-Methylisothiazolin-3-on, 5-Chlor-N-methylisothiazolin-3-on, 4,5-Dichloro-N-octyl-isothiazolin-3-on, 5-Chlor-N-octylisothiazolinon, N-Octyl-isothiazolin-3-on, 4,5-Trimethylen-isothiazolinon und 4,5-Benzisothiazolinon.

4. Zusammensetzung gemäß mindestens einem der Ansprüche 1 bis 3, **dadurch gekennzeichnet, dass** $R^3$ oder $R^4$ in Verbindungen der Formel (II) gleich oder verschieden sein können und unabhängig voneinander ausgewählt sind aus der Gruppe Benzyl, $-CH_2-CH_2-O-CH_2-CH_2-OH$, $-[CH_2-CH_2-O]_2-CH_2-CH_2-OH$, $-[CH_2-CH_2-O]_3-CH_2-CH_2-OH$, $-[CH_2-CH_2-O]_4-CH_2-CH_2-OH$, Dichlorbenzyl, n-, iso-Nonyl, n-, iso-Decyl, n-, iso-Dodecyl, n-, iso-Hexadecyl n-, iso-Octenyl, n-, iso-Nonenyl oder n-, iso-Decenyl und $R^1$ und $R^2$ für Methyl stehen.

5. Zusammensetzung gemäß mindestens einem der Ansprüche 1 bis 4, **dadurch gekennzeichnet, dass** die Verbindungen der Formel (III) ausgewählt sind aus der Gruppe N-(3-Aminopropyl)-N-dodecyl-1,3-propandiamin, N-(3-Aminopropyl)-N-decyl-1,3-propandiamin, N-(3-Aminopropyl)-N-tetradecyl-1,3-propandiamin sowie deren Säureadditionsverbindungen.

**6.** Zusammensetzung gemäß mindestens einem der Ansprüche 1 bis 5, **dadurch gekennzeichnet, dass** mindestens 75 Gew. % - 85 Gew.-% Penflufen und 15 Ges.-% - 25 Gew.-% 3-Iod-2-propinyl-N-butylcarbamat enthalten sind.

**7.** Zusammensetzung gemäß mindestens einem der Ansprüche 1 bis 6, **dadurch gekennzeichnet, dass** mindestens 50 Gew.-% Penflufen und mindestens 10 Gew.% 4,5-Dichloro-N-octylisothiazolin-3-on enthalten sind.

**8.** Zusammensetzungen nach einem oder mehreren der Ansprüche 1 bis 7 **dadurch gekennzeichnet, dass** die Zusammensetzung

a) Penflufen und dessen Salze oder Säureadditionsverbindungen und
b) mindestens eine Verbindung ausgewählt aus der Gruppe o-Phenylphenol und dessen Alkali- und Erdalkalimetallsalze
Natriumborat, Borsäure, Boroxid,
Benzalkoniumchlorid, Didecyldimethylammoniumchlorid, Didecylmethylpoly(oxyethyl)ammoniumpropionat, Didecyldimethylammoniumcarbonat, Didecyldimethyl-ammoniumhydrogencarbonat oder eine Mischung aus Didecyldimethyl-ammoniumcarbonat und Didecyldimethylammoniumhydrogencarbonat 4,5-Dichloro-N-octylisothiazolin-3-on,
3-Iod-2-propinyl-N-butylcarbamat, N-(3-Aminopropyl)-N-dodecyl-1,3-propandiamin,

enthält.

**9.** Verwendung von Zusammensetzungen gemäß wenigstens einem der Ansprüche 1 bis 8 zum Schutz von technischen Materialien vor Befall und/oder Zerstörung durch Mikroorganismen.

**10.** Verwendung gemäß Anspruch 9, **dadurch gekennzeichnet, dass** das technische Material Holz, Holzwerkstoff oder Holz-Plastik-Verbundstoff ist.

**11.** Verwendung gemäß Anspruch 10 zum Schutz von Holz, Holzwerkstoff oder Holz-Plastik-Verbundstoff durch holzzerstörende Basidiomyceten, insbesondere Holobasidiomyceten.

**12.** Verwendung gemäß Anspruch 11 zum Schutz von Holz, Holzwerkstoff oder Holz-Plastik-Verbundstoff durch holzzerstörende Basidiomyceten, **dadurch gekennzeichnet, dass** es sich bei den holzzerstörenden Basidiomyceten um Arten der Gattungen Gloeophyllum, Coniophora, Coriolus, Stereum oder Poria handelt.

**13.** Technische Materialien, insbesondere Holz, Holzwerkstoff oder Holz-Plastik-Verbundstoff enthaltend

a) Penflufen und dessen Salze oder Säureadditionsverbindungen
und
b) mindestens eine Verbindung ausgewählt aus der Gruppe
o-Phenylphenol und dessen Alkali- und Erdalkalimetallsalze, Borverbindungen, Verbindungen der Formel (II)

$$((R^1R^2R^3R^4)N)_nX \qquad (II)$$

wobei

$R^1$ oder $R^2$ gleich oder verschieden sein können und unabhängig voneinander für $C_1$-$C_6$-Alkyl stehen und $R^3$ oder $R^4$ gleich oder verschieden sein können und unabhängig voneinander ausgewählt sind aus der Gruppe $C_6$-$C_{22}$-Alkyl, $C_6$-$C_{22}$-Alkenyl, $C_6$-$C_{24}$-Aryl, $C_5$-$C_{20}$-Cycloalkyl oder Reste der Formel (IV)

$$-[CH_2-CH_2-O]_z-CH_2-CH_2-OH \qquad (IV)$$

wobei z = 1, 2, 3, 4, 5, 6, 7, 8, 9 oder 10 ist und X ein n-fach geladenes Anion ist und n eine beliebige ganze Zahl größer als Null darstellt, Isothiazolinone, 3-Iod-2-propinyl-N-butylcarbamat, 3-Iod-2-propinyl-cycloalkylcarbamate, 3-Iod-2-propinyl-arylcarbamat und Verbindungen der Formel (III)

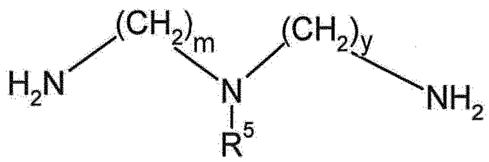

(III)

in der

$R^5$ $C_8$-$C_{18}$-Alkyl, $C_8$-$C_{18}$-Alkenyl oder $C_6$-$C_{20}$-Cycloalkyl und
m und y gleich und verschieden sein können und eine Zahl 1, 2, 3, 4, 5 oder 6 darstellen sowie deren Säureadditionsverbindungen.

**14.** Verfahren zum Schutz von technischen Materialien vor Befall und/oder Zerstörung durch Mikroorganismen, **dadurch gekennzeichnet, dass** man wenigstens eine Zusammensetzung, enthaltend

a) Penflufen und dessen Salze oder Säureadditionsverbindungen-
und
b) mindestens eine Verbindung ausgewählt aus der Gruppe
o-Phenylphenol und dessen Alkali- und Erdalkalimetallsalze, Borverbindungen, Verbindungen der Formel (II)

$$((R^1R^2R^3R^4)N)_nX \qquad (II)$$

wobei

$R^1$ oder $R^2$ gleich oder verschieden sein können und unabhängig voneinander für $C_1$-$C_6$-Alkyl stehen und
$R^3$ oder $R^4$ gleich oder verschieden sein können und unabhängig voneinander ausgewählt sind aus der Gruppe $C_6$-$C_{22}$-Alkyl, $C_6$-$C_{22}$-Alkenyl, $C_6$-$C_{24}$-Aryl, $C_5$-$C_{20}$-Cycloalkyl oder Reste der Formel (IV)

$$-[CH_2-CH_2-O]_z-CH_2-CH_2-OH \qquad (IV)$$

wobei z = 1, 2, 3, 4, 5, 6, 7, 8, 9 oder 10 ist und X ein n-fach geladenes Anion ist und n eine beliebige ganze Zahl größer als Null darstellt, Isothiazolinone, 3-Iod-2-propinyl-N-butylcarbamat, 3-Iod-2-propinyl-cycloalkylcarbamate, 3-Iod-2-propinyl-arylcarbamat und Verbindungen der Formel (III)

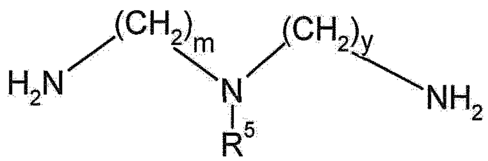

(III)

in der

$R^5$ $C_8$-$C_{18}$-Alkyl, $C_8$-$C_{18}$-Alkenyl oder $C_5$-$C_{20}$-Cycloalkyl und
m und y gleich und verschieden sein können und eine Zahl 1, 2, 3, 4, 5 oder 6 darstellen, sowie deren Säureadditionsverbindungen,

auf den Mikroorganismus oder dessen Lebensraum einwirken lässt.

## Claims

**1.** Compositions, comprising

a) penflufen and its salts or acid addition compounds
and
b) at least one compound selected from the group of
o-phenylphenol and its alkali metal and alkaline earth metal salts, boron compounds, compounds of the formula

(II)

$$((R^1R^2R^3R^4)N)_nX \qquad (II)$$

where

$R^1$ and $R^2$ may be identical or different and independently of one another represent $C_1$-$C_6$-alkyl and $R^3$ and $R^4$ may be identical or different and independently of one another are selected from the group consisting of $C_6$-$C_{22}$-alkyl, $C_6$-$C_{22}$-alkenyl, $C_6$-$C_{24}$-aryl, $C_5$-$C_{20}$-cycloalkyl and radicals of the formula (IV)

$$-[CH_2-CH_2-O]_z-CH_2-CH_2-OH \qquad (IV)$$

where z = 1, 2, 3, 4, 5, 6, 7, 8, 9 or 10 and
X represents an anion carrying a charge of n and
n is an integer greater than zero, isothiazolinones, 3-iodo-2-propynyl N-butylcarbamate, 3-iodo-2-propynyl cycloalkylcarbamates, 3-iodo-2-propynyl arylcarbamates and compounds of the formula (III)

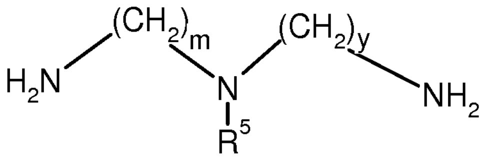

(III)

in which

$R^5$ represents $C_8$-$C_{18}$-alkyl, $C_8$-$C_{18}$-alkenyl or $C_5$-$C_{20}$-cycloalkyl and
m and y may be identical or different and represent a number 1, 2, 3, 4, 5 or 6, and their acid addition compounds.

**2.** Composition according to Claim 1, **characterized in that** the boron compound is selected from the group consisting of disodium tetraborate decahydrate (borax), boric acid, boric esters, boron oxide and disodium octaborate tetrahydrate.

**3.** Composition according to at least one of Claims 1 and 2, **characterized in that** the isothiazolinone is selected from the group consisting of N-methylisothiazolin-3-one, 5-chloro-N-methylisothiazolin-3-one, 4,5-dichloro-N-octylisothiazolin-3-one, 5-chloro-N-octylisothiazolinone, N-octyl-isothiazolin-3-one, 4,5-trimethyleneiso-thiazolinone and 4,5-benzisothiazolinone.

**4.** Composition according to at least one of Claims 1 to 3, **characterized in that** $R^3$ and $R^4$ in compounds of the formula (II) may be identical or different and independently of one another are selected from the group consisting of benzyl, $-CH_2-CH_2-O-CH_2-CH_2-OH$, $-[CH_2-CH_2-O]_2-CH_2-CH_2-OH$, $-[CH_2-CH_2-O]_3-CH_2-CH_2-OH$, $-[CH_2-CH_2-O]_4-CH_2-CH_2-OH$, dichlorobenzyl, n-, isononyl, n-, isodecyl, n-, isododecyl, n-, isohexadecyl n-, isooctenyl, n-, isononenyl and n-, isodecenyl and $R^1$ and $R^2$ represent methyl.

**5.** Composition according to at least one of Claims 1 to 4, **characterized in that** the compounds of the formula (III) are selected from the group consisting of N-(3-aminopropyl)-N-dodecyl-1,3-propanediamine, N-(3-aminopropyl)-N-decyl-1,3-propanediamine, N-(3-aminopropyl)-N-tetradecyl-1,3-propanediamine and their acid addition compounds.

**6.** Composition according to at least one of Claims 1 to 5, **characterized in that** at least 75% by weight - 85% by weight of penflufen and 15% by weight - 25% by weight of 3-iodo-2-propynyl N-butylcarbamate are present.

**7.** Composition according to at least one of Claims 1 to 6, **characterized in that** at least 50% by weight of penflufen and at least 10% by weight of 4,5-dichloro-N-octylisothiazolin-3-one are present.

**8.** Compositions according to one or more of Claims 1 to 7, **characterized in that** the composition comprises

a) penflufen and its salts or acid addition compounds
and

b) at least one compound selected from the group consisting of o-phenylphenol and its alkali metal and alkaline earth metal salts sodium borate, boric acid, boron oxide,
benzalkonium chloride, didecyldimethylammonium chloride, didecylmethylpoly-(oxyethyl)ammonium propionate, dodecyldimethylammonium carbonate, didecyldimethylammonium bicarbonate or a mixture of didecyldimethylammonium carbonate and didecyldimethylammonium bicarbonate 4,5-dichloro-N-octylisothiazolin-3-one, 3-iodo-2-propynyl N-butylcarbamate, N-(3-aminopropyl)-N-dodecyl-1,3-propanediamine.

**9.** Use of compositions according to at least one of Claims 1 to 8 for protecting industrial materials against attack and/or destruction by microorganisms.

**10.** Use according to Claim 9, **characterized in that** the industrial material is wood, a timber product or a wood-plastic composite.

**11.** Use according to Claim 10 for the protection of wood, a timber product or a wood/plastic composite against wood-destroying basidiomycetes, in particular holobasidiomycetes.

**12.** Use according to Claim 11 for the protection of wood, a timber product or a wood/plastic composite by wood-destroying basidiomycetes, **characterized in that** the wood-destroying basidiomycetes are species of the genera Gloeophyllum, Coniophora, Coriolus, Stereum or Poria.

**13.** Industrial materials, in particular wood, a timber product or a wood-plastic composite, comprising

a) penflufen and its salts or acid addition compounds
and
b) at least one compound selected from the group of
o-phenylphenol and its alkali metal and alkaline earth metal salts, boron compounds, compounds of the formula (II)

$$((R^1R^2R^3R^4)\ N)_nX \qquad (II)$$

where

$R^1$ and $R^2$ may be identical or different and independently of one another represent $C_1$-$C_6$-alkyl and
$R^3$ and $R^4$ may be identical or different and independently of one another are selected from the group consisting of $C_6$-$C_{22}$-alkyl, $C_6$-$C_{22}$-alkenyl, $C_6$-$C_{24}$-aryl, $C_5$-$C_{20}$-cycloalkyl and radicals of the formula (IV) $-[CH_2-CH_2-O]_z-CH_2-CH_2-OH$ (IV) where z = 1, 2, 3, 4, 5, 6, 7, 8, 9 or 10 and
X represents an anion carrying a charge of n and
n is an integer greater than zero, isothiazolinones, 3-iodo-2-propynyl N-butylcarbamate, 3-iodo-2-propynyl cycloalkylcarbamates, 3-iodo-2-propynyl arylcarbamate and compounds of the formula (III)

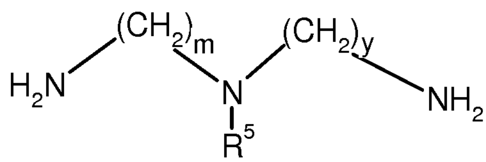

(III)

in which

$R^5$ represents $C_8$-$C_{18}$-alkyl, $C_8$-$C_{18}$-alkenyl or $C_5$-$C_{20}$-cycloalkyl and
m and y may be identical or different and represent a number 1, 2, 3, 4, 5 or 6, and their acid addition compounds.

**14.** Process for protecting industrial materials against attack and/or destruction by microorganisms, **characterized in that** at least one composition comprising

a) penflufen and its salts or acid addition compounds and
b) at least one compound selected from the group of
o-phenylphenol and its alkali metal and alkaline earth metal salts, boron compounds, compounds of the formula

(II)

$$((R^1R^2R^3R^4)\ N)_nX \qquad (II)$$

where

$R^1$ and $R^2$ may be identical or different and independently of one another represent $C_1$-$C_6$-alkyl and
$R^3$ and $R^4$ may be identical or different and independently of one another are selected from the group consisting of $C_6$-$C_{22}$-alkyl, $C_6$-$C_{22}$-alkenyl, $C_6$-$C_{24}$-aryl, $C_5$-$C_{20}$-cycloalkyl and radicals of the formula (IV)

$$-[CH_2-CH_2-O]_z-CH_2-CH_2-OH \qquad (IV)$$

where z = 1, 2, 3, 4, 5, 6, 7, 8, 9 or 10 and
X represents an anion carrying a charge of n and
n is an integer greater than zero, isothiazolinones, 3-iodo-2-propynyl N-butylcarbamate, 3-iodo-2-propynyl cycloalkylcarbamates, 3-iodo-2-propynyl arylcarbamate and compounds of the formula (III)

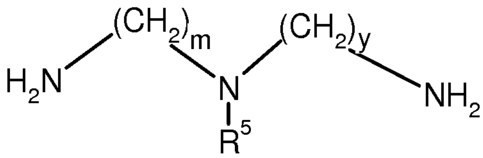

(III)

in which

$R^5$ represents $C_8$-$C_{18}$-alkyl, $C_8$-$C_{18}$-alkenyl or $C_5$-$C_{20}$-cycloalkyl and
m and y may be identical or different and represent a number 1, 2, 3, 4, 5 or 6, and their acid addition compounds,

is allowed to act on the microorganism or its habitat.

**Revendications**

**1.** Compositions, contenant :

a) du penflufène et ses sels ou composés d'addition acide
et
b) au moins un composé choisi dans le groupe constitué par l'o-phénylphénol et ses sels de métaux alcalins et alcalino-terreux, les composés de bore, les composés de formule (II)

$$((R^1R^2R^3R^4)N)_nX \qquad (II)$$

dans laquelle

$R^1$ ou $R^2$ peuvent être identiques ou différents, et représentent indépendamment l'un de l'autre alkyle en $C_1$-$C_6$, et
$R^3$ ou $R^4$ peuvent être identiques ou différents, et sont choisis indépendamment l'un de l'autre dans le groupe constitué par alkyle en $C_6$-$C_{22}$, alcényle en $C_6$-$C_{22}$, aryle en $C_6$-$C_{24}$, cycloalkyle en $C_5$-$C_{20}$ ou les radicaux de formule (IV)

$$-[CH_2-CH_2-O]_z-CH_2-CH_2-OH \qquad (IV)$$

avec z = 1, 2, 3, 4, 5, 6, 7, 8, 9 ou 10, et
X est un anion à n charges, et
n représente un nombre entier quelconque supérieur à zéro,
les isothiazolinones, le carbamate de 3-iodo-2-propynyl-N-butyle, les carbamates de 3-iodo-2-propynyl-cycloalkyle, le carbamate de 3-iodo-2-propynyl-aryle et les composés de formule (III)

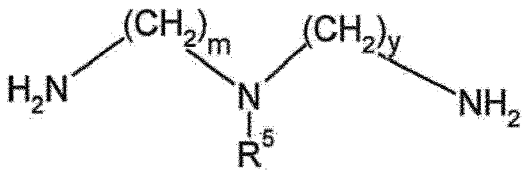

(III)

dans laquelle

$R^5$ représente alkyle en $C_8$-$C_{18}$, alcényle en $C_8$-$C_{18}$ ou cycloalkyle en $C_5$-$C_{20}$, et m et y peuvent être identiques ou différents, et représentent un nombre 1, 2, 3, 4, 5 ou 6,
ainsi que leurs composés d'addition acide.

2. Composition selon la revendication 1, **caractérisée en ce que** le composé de bore est choisi dans le groupe constitué par le décahydrate de tétraborate de disodium (Borax), l'acide borique, les esters de l'acide borique, l'oxyde de bore et le tétrahydrate d'octaborate de disodium.

3. Composition selon au moins l'une quelconque des revendications 1 ou 2, **caractérisée en ce que** l'isothiazolinone est choisie dans le groupe constitué par la N-méthylisothiazolin-3-one, la 5-chloro-N-méthylisothiazolin-3-one, la 4,5-dichloro-N-octyl-isothiazolin-3-one, la 5-chloro-N-octylisothiazolinone, la N-octyl-isothiazolin-3-one, la 4,5-triméthylène-isothiazolinone et la 4,5-benzisothiazolinone.

4. Composition selon au moins l'une quelconque des revendications 1 à 3, **caractérisée en ce que** $R^3$ ou $R^4$ dans les composés de formule (II) peuvent être identiques ou différents et sont choisis indépendamment l'un de l'autre dans le groupe constitué par benzyle, $-CH_2-CH_2-O-CH_2-CH_2-OH$, $-[CH_2-CH_2-O]_2-CH_2-CH_2-OH$, $-[CH_2-CH_2-O]_3-CH_2-CH_2-OH$, $-[CH_2-CH_2-O]_4-CH_2-CH_2-OH$, dichlorobenzyle, n-, iso-nonyle, n-, iso-décyle, n-, iso-dodécyle, n-, iso-hexadécyle, n-, iso-octényle, n-, iso-nonényle ou n-, iso-décényle, et $R^1$ et $R^2$ représentent méthyle.

5. Composition selon au moins l'une quelconque des revendications 1 à 4, **caractérisée en ce que** les composés de formule (III) sont choisis dans le groupe constitué par la N-(3-aminopropyl)-N-dodécyl-1,3-propanediamine, la N-(3-aminopropyl)-N-décyl-1,3-propanediamine, la N-(3-aminopropyl)-N-tétradécyl-1,3-propanediamine, ainsi que leurs composés d'addition acide.

6. Composition selon au moins l'une quelconque des revendications 1 à 5, **caractérisée en ce qu'**au moins 75 % en poids à 85 % en poids de penflufène et 15 % en poids à 25 % en poids de carbamate de 3-iodo-2-propynyl-N-butyle sont contenus.

7. Composition selon au moins l'une quelconque des revendications 1 à 6, **caractérisée en ce qu'**au moins 50 % en poids de penflufène et au moins 10 % en poids de 4,5-dichloro-N-octylisothiazolin-3-one sont contenus.

8. Composition selon une ou plusieurs des revendications 1 à 7, **caractérisée en ce que** la composition contient

a) du penflufène et ses sels ou composés d'addition acide
et
b) au moins un composé choisi dans le groupe constitué par l'o-phénylphénol et ses sels de métaux alcalins et alcalino-terreux,
le borate de sodium, l'acide borique, l'oxyde de bore,
le chlorure de benzalkonium, le chlorure de didécyldiméthylammonium, le propionate de didécyl-méthylpoly(oxyéthyl)ammonium,
le carbonate de didécyldiméthylammonium, l'hydrogénocarbonate de didécyldiméthylammonium ou un mélange de carbonate de didécyldiméthylammonium et d'hydrogénocarbonate de didécyldiméthylammonium,
la 4,5-dichloro-N-octylisothiazolin-3-one,
le carbamate de 3-iodo-2-propynyl-N-butyle,
la N-(3-aminopropyl)-N-dodécyl-1,3-propanediamine.

9. Utilisation de compositions selon au moins l'une quelconque des revendications 1 à 8 pour la protection de matériaux

techniques contre une infestation et/ou une destruction par des microorganismes.

**10.** Utilisation selon la revendication 9, **caractérisée en ce que** le matériau technique est le bois, un matériau à base de bois ou un composite bois-plastique.

**11.** Utilisation selon la revendication 10 pour la protection de bois, d'un matériau à base de bois ou d'un composite bois-plastique contre des basidiomycètes détruisant le bois, notamment des holobasidiomycètes.

**12.** Utilisation selon la revendication 11 pour la protection de bois, d'un matériau à base de bois ou d'un composite bois-plastique contre des basidiomycètes détruisant le bois, **caractérisée en ce que** les basidiomycètes détruisant sont des genres Gloeophyllum, Coniophora, Coriolus, Stereum ou Poria.

**13.** Matériaux techniques, notamment bois, matériau à base de bois ou composite bois-plastique, contenant :

a) du penflufène et ses sels ou composés d'addition acide
et
b) au moins un composé choisi dans le groupe constitué par l'o-phénylphénol et ses sels de métaux alcalins et alcalino-terreux, les composés de bore, les composés de formule (II)

$$((R^1R^2R^3R^4)N)_nX \qquad (II)$$

dans laquelle

$R^1$ ou $R^2$ peuvent être identiques ou différents, et représentent indépendamment l'un de l'autre alkyle en $C_1$-$C_6$, et
$R^3$ ou $R^4$ peuvent être identiques ou différents, et sont choisis indépendamment l'un de l'autre dans le groupe constitué par alkyle en $C_6$-$C_{22}$, alcényle en $C_6$-$C_{22}$, aryle en $C_6$-$C_{24}$, cycloalkyle en $C_5$-$C_{20}$ ou les radicaux de formule (IV)

$$-[CH_2-CH_2-O]_z-CH_2-CH_2-OH \qquad (IV)$$

avec z = 1, 2, 3, 4, 5, 6, 7, 8, 9 ou 10, et
X est un anion à n charges, et
n représente un nombre entier quelconque supérieur à zéro,
les isothiazolinones, le carbamate de 3-iodo-2-propynyl-N-butyle, les carbamates de 3-iodo-2-propynyl-cycloalkyle, le carbamate de 3-iodo-2-propynyl-aryle et les composés de formule (III)

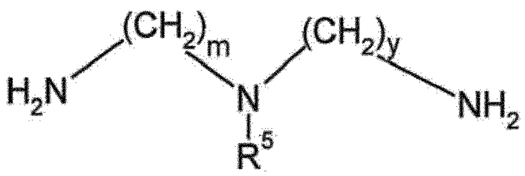

(III)

dans laquelle

$R^5$ représente alkyle en $C_8$-$C_{18}$, alcényle en $C_8$-$C_{18}$ ou cycloalkyle en $C_5$-$C_{20}$, et m et y peuvent être identiques ou différents, et représentent un nombre 1, 2, 3, 4, 5 ou 6,
ainsi que leurs composés d'addition acide.

**14.** Procédé de protection de matériaux techniques d'une infestation et/ou d'une destruction par des microorganismes, **caractérisé en ce qu'**au moins une composition contenant :

a) du penflufène et ses sels ou composés d'addition acide
et
b) au moins un composé choisi dans le groupe constitué par l'o-phénylphénol et ses sels de métaux alcalins et alcalino-terreux, les composés de bore, les composés de formule (II)

$$((R^1R^2R^3R^4)N)_nX \qquad (II)$$

dans laquelle

$R^1$ ou $R^2$ peuvent être identiques ou différents, et représentent indépendamment l'un de l'autre alkyle en $C_1$-$C_6$, et
$R^3$ ou $R^4$ peuvent être identiques ou différents, et sont choisis indépendamment l'un de l'autre dans le groupe constitué par alkyle en $C_6$-$C_{22}$, alcényle en $C_6$-$C_{22}$, aryle en $C_6$-$C_{24}$, cycloalkyle en $C_5$-$C_{20}$ ou les radicaux de formule (IV)

$$-[CH_2-CH_2-O]_z-CH_2-CH_2-OH \qquad (IV)$$

avec z = 1, 2, 3, 4, 5, 6, 7, 8, 9 ou 10, et
X est un anion à n charges, et
n représente un nombre entier quelconque supérieur à zéro,
les isothiazolinones, le carbamate de 3-iodo-2-propynyl-N-butyle, les carbamates de 3-iodo-2-propynyl-cycloalkyle, le carbamate de 3-iodo-2-propynyl-aryle et les composés de formule (III)

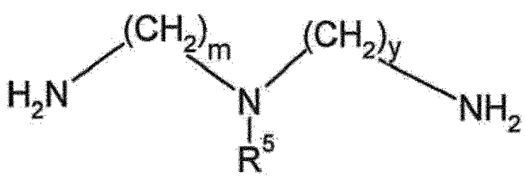

(III)

dans laquelle

$R^5$ représente alkyle en $C_8$-$C_{18}$, alcényle en $C_8$-$C_{18}$ ou cycloalkyle en $C_5$-$C_{20}$, et m et y peuvent être identiques ou différents, et représentent un nombre 1, 2, 3, 4, 5 ou 6,
ainsi que leurs composés d'addition acide,
est laissée agir sur les microorganismes ou leur habitat.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03010149 A
- WO 2006114212 A
- WO 2009098225 A2
- WO 2005041653 A
- WO 2009098218 A
- WO 2009090181 A
- WO 2005058839 A
- WO 2007110173 A
- WO 2008014955 A


### In der Beschreibung aufgeführte Nicht-Patentliteratur


- **F.C. KULL ; P.C. EISMANN ; H.D. SYLVESTROWICZ ; R.L. MAYER.** *Applied Microbiology,* 1961, vol. 9, 538-541